(19) **Europäisches Patentamt**

**European Patent Office**

**Office européen des brevets**

(11) **EP 1 014 076 B1**

(12) **EUROPEAN PATENT SPECIFICATION**

(45) Date of publication and mention
of the grant of the patent:
**25.08.2004 Bulletin 2004/35**

(51) Int Cl.7: **G01N 21/67**

(21) Application number: **99122782.8**

(22) Date of filing: **16.11.1999**

(54) **Glow discharge emission spectroscopic analysis apparatus**

Vorrichtung zur Glimmentladungs-Emissions-Spektroanalyse

Appareil de spectroscopie d'émission à décharge luminescente

(84) Designated Contracting States:
**DE FR GB**

(30) Priority: **22.12.1998 JP 36522998**

(43) Date of publication of application:
**28.06.2000 Bulletin 2000/26**

(73) Proprietor: **HORIBA, LTD.**
**Minami-ku Kyoto (JP)**

(72) Inventors:
• **Shimidzu, Ryosuke, c/o Atago Bussan Co., Ltd.**
**Tokyo (JP)**

• **Matsumoto, Susumu**
**Tokyo 136-0076 (JP)**

(74) Representative: **Müller - Hoffmann & Partner**
**Patentanwälte,**
**Innere Wiener Strasse 17**
**81667 München (DE)**

(56) References cited:
**EP-A- 0 437 358**          **US-A- 5 028 133**

**Description**

BACKGROUND OF THE INVENTION

Field of the Invention

The present invention relates to a glow discharge emission spectroscopic analysis apparatus, more specifically it relates to a glow discharge emission spectroscopic analysis apparatus where a sample is arranged so as to face an anode of a glow discharge tube, an inert gas is supplied to the sample surface under a low pressure and a glow discharge is emitted by applying a high-frequency voltage or a DC voltage between the sample and the anode so that a discharge emission can be analyzed, and still more specifically it relates to a sample holding and voltage applying structure.

Description of the Prior Art

One example of a glow discharge emission spectroscopic analysis apparatus is a high-frequency glow discharge emission spectroscopic analysis apparatus, and it is utilized for chemical analysis of conductor, non-conductor and semiconductor materials. According to the remarkable development of semiconductor techniques, a diameter of a semiconductor wafer such as a silicon wafer to be used in manufacturing a semiconductor apparatus becomes larger gradually.

The closest prior art document EP-A-0 437 358 discloses a glow discharge emission spectroscopic analysis apparatus according to the preamble of claim 1. If the conductive portion of EP-A-0 437 358 is provided and exposed so as to face the aperture of the glow discharge chamber, there is a risk that the conductive portion is sputtered.

The inventors of the present invention arranged a sample so as to face an anode of a glow discharge tube, supplied an inert gas to the sample surface under a low pressure, emitted a glow discharge by applying a high-frequency voltage between a semiconductor wafer and the anode so as to analyze the discharge emission. However, scattering of analyzed data between a center portion and an outer peripheral portion of the semiconductor wafer surface surpassed the estimate, that caused a problem. Moreover, scattering of the analyzed data according to forms of the semiconductor wafer surpassed the estimate.

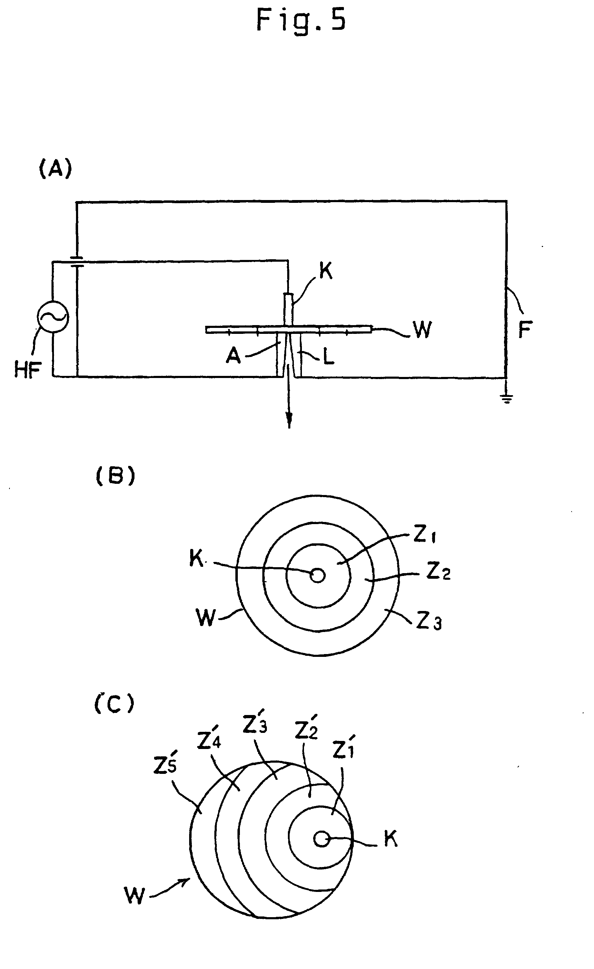

The inventors made various examinations and came to a conclusion such that the scattering is mainly caused by a state of coupling to a Faraday cage in portions other than the portion to which a high-frequency voltage is applied which differs according to a portion to which the high-frequency voltage is applied even if the same semiconductor wafer is used. This point will be described below with reference to Fig. 5.

Fig. 5(A) shows a state that a voltage is applied to a semiconductor wafer, more specifically shows a state that a semiconductor wafer W is provided to an anode A side of a glow discharge tube L provided in a Faraday cage F so that the center of the semiconductor wafer W coincides with the center of the anode A, a cathode K is brought into contact with the semiconductor wafer W so as to coincide with the center of the semiconductor wafer W, and a high-frequency power source HF is connected between the anode A and the cathode K. Fig 5(B) is a drawing showing a planar relationship between the semiconductor wafer W and the cathode K in the state of Fig. 5(A). Moreover, Fig. 5(C) is a drawing showing a planar relationship between the semiconductor wafer W and the cathode K.

As shown in Fig. 5(B), when the cathode K is brought into contact with the semiconductor wafer W so as to coincide with the center of the semiconductor wafer W, the semiconductor wafer W is composed of ring bands $Z_1$, $Z_2$ and $Z_3$, and the impedances of the ring bands are respectively given by $Z_1$, $Z_2$ and $Z_3$. In this case, the impedance $Z_t$ viewed from the cathode K is represented by the following equation (1).

$$Z_t = Z_1 + Z_2 + Z_3 \qquad (1)$$

In addition, as shown in Fig. 5(C), when the cathode K is brought into contact with a peripheral portion of the semiconductor wafer W, the semiconductor wafer W is composed of ring bands $Z_1'$, $Z_2'$, $Z_3'$, $Z_4'$ and $Z_5'$. In this case, the impedance $Z_t'$ viewed from the cathode K is represented by the following equation (2).

$$Z_t' = Z_1' + Z_2' + Z_3' + Z_4' + + Z_5' \qquad (2)$$

The impedance $Z_i$ of an arbitrary ring band is represented by the following equation (3).

$$Z_1 = a_i + 1/jb_i \qquad (3)$$

Here, $a_1$ is a resistance component for generating a voltage due to an electric current in an emission direction in the ring band, and $1/jb_i$ is a value relating to a capacitive coupling with the Faraday cage F of the ring band. In general, the impedance of the semiconductor wafer W is represented by $\Sigma Z_1$.

According to the above equations (1) through (3), it is clear that the $Z_t$ is different from $Z_t'$, and even if equal electric power is supplied to the semiconductor wafer W via the cathode K, the intensity of the discharge emission generated at this time varies, and thus analyzed results are different from each other.

The inventors consider that the above-mentioned problem is caused not only in a semiconductor wafer but also in a conductor, non-conductor and the like.

SUMMARY OF THE INVENTION

The present invention is devised paying attention to the problem noted with the closest prior art, and its object is to provide a glow discharge emission spectroscopic analysis apparatus which is capable of making a desired chemical analysis without the risk of sputtering a conductive portion, therebye having excellent reproducibility.

To solve this object, the present invention provides a glow discharge emission spectroscopic analysis apparatus as specified in claim 1.

Preferred embodiments of the invention are described in the subclaims.

BRIEF DESCRIPTION OF THE DRAWINGS

Fig. 1 is a drawing schematically showing a whole structure of a glow discharge emission spectroscopic analysis apparatus of the present invention, more specifically a perspective view showing a Faraday cage.
Fig. 2 is a sectional view showing a structure of the Faraday cage.
Fig. 3 is a sectional view showing a structure of a vicinity of a glow discharge tube.
Fig. 4 is an enlarged perspective view showing a main section of a mechanism for holding a sample to the glow discharge tube.
Fig. 5 is a drawing for explaining a prior art apparatus.

DETAILED DESCRIPTION OF THE PREFERRED EMBODIMENTS

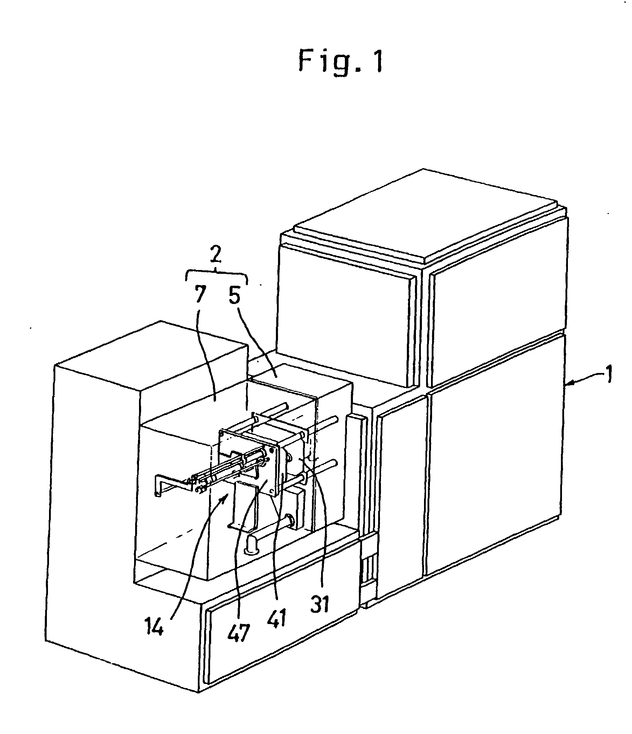

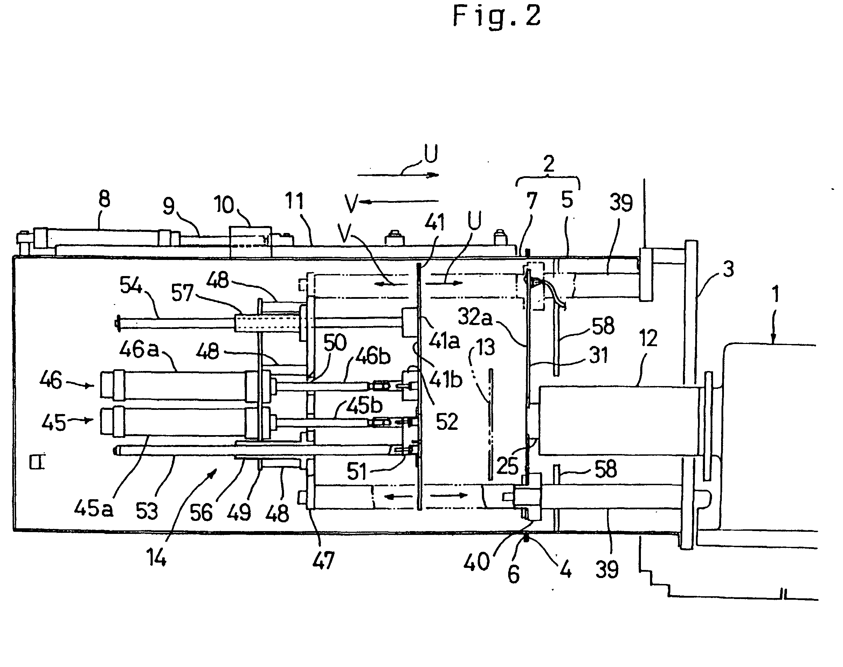

Figs. 1 through 4 show one embodiment of the present invention. At first, in Fig. 1, a spectroscope, such as a polychrometer and a monochrometer for analyzing a discharge emission generated in a glow discharge tube (mentioned later), a power source section and the like are provided in an apparatus main body 1. A faraday cage 2 is provided on the front side of the apparatus main body 1. As shown in Fig. 2, the Faraday cage 2 is made of a metallic cylinder fixed to a bracket member 3 connected with the apparatus main body 1. The Faraday cage 2 is composed of a cylindrical first cage section 5 which is provided with a flange 4 and is made of metal, and a second cage section 7, which is provided so as to contact with or separate from the first cage section 5, has a flange 6 at its one end, and is made of a metallic cylinder in which the other end is closed. One end of an air cylinder 8 is fixed to a side surface of the closed side of the second cage section 7, and a forward end of a piston rod 9 is coupled to a stanchion 10 which stands in a vertical direction in Fig. 2. The second cage section 7 slides to a direction of an arrow U or V by expansion and contraction of the piston rod 9 so that the flange 4 of the first cage section 5 and the flange 6 of the second cage section 7 closely contact with each other or are separated from each other by a predetermined gap. Her, 11 is a guide member.

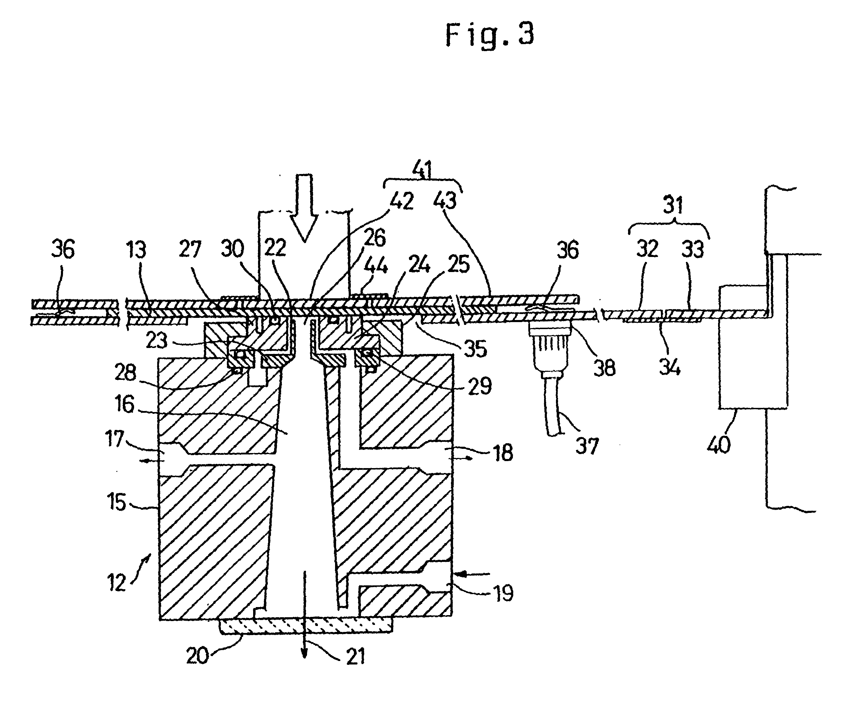

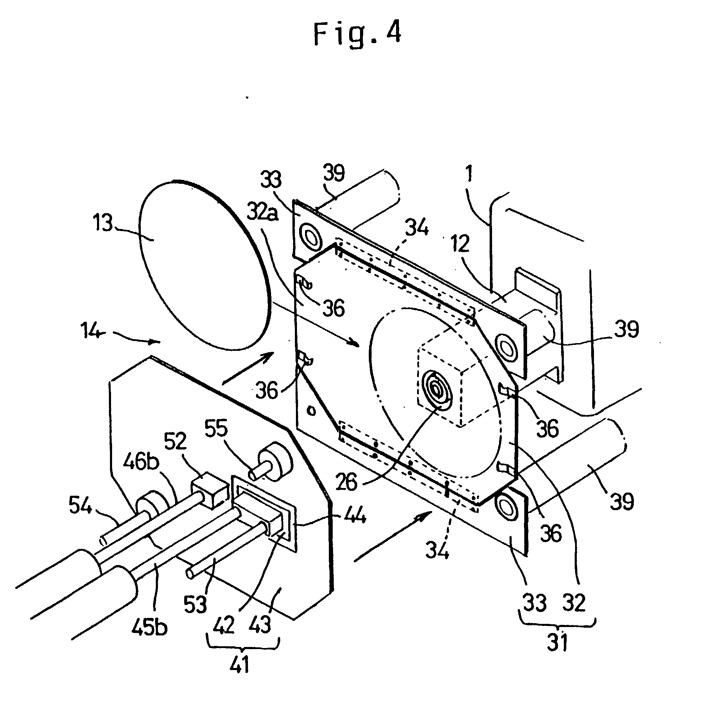

In the Faraday cage 2, a glow discharge tube 12, and a sample holding mechanism 14, which holds a sample 13 to be analyzed (for example, semiconductor wafer) to one end of the glow discharge tube 12 and applies a predetermined voltage to the sample 13, are provided. There will be detailed below their structures with reference to Figs. 3 and 4.

At first, the description will be given as to the structure of the glow discharge tube 12. Fig. 3 shows a lamp body 15, and a discharge emission chamber 16 which broadens towards its bottom opening is formed therein. Vacuum ports 17 and 18 are formed in the lamp body 15, and they are connected with a vacuum pump, not shown. Moreover, a port 19 is provided for introducing an inert gas such as argon gas.

An end on the broaden opening side of the discharge emission chamber 16 is sealed by a window 20 made of magnesium fluoride or the like, and a light 21 generated due to discharge, mentioned later, is introduced to a direction of a spectroscope (not shown) in the apparatus main body 1. Moreover, an anode 23 having a cylindrical portion 22 at its center is attached to the other end which faces the window 20 by an anode holder 24 and a supporting body 25 made of, for example, ceramics so as to make airtight in the lamp body 15. A through hole 26 into which the cylinder section 22 is inserted is formed in the anode holder 24, and a cylinder section 27 where the through hole 26 is formed is slightly projected from an upper surface of the supporting body 25 so that its peripheral portion is held by the supporting body 25. As mentioned above, the discharge emission chamber 16 on the anode 23 side is opened, but this opening is sealed by a surface of the semiconductor wafer 13 to be sputtered held by the sample holding mechanism 14, mentioned later. Here, 28, 29 and 30 are sealing members.

There will be described below the structure of the mechanism 14 for holding the semiconductor wafer 13 in a predetermined state also with reference to Fig. 4. The sample holding mechanism 14 is provided to the anode 23 side of the glow discharge tube 12. A first electrical conductor 31 is provided fixedly, it sandwiches the semiconductor wafer 13 by the co-operation with a second electrical conductor 41, mentioned later, so as to cover its whole surface, and applies a predetermined voltage to the semiconductor wafer 13. The first electrical conductor 31 as well as the second electrical conductor 41 serve as a cathode. The first electrical conductor 31 is made of a copper plate having a thickness of about 3 mm, for example, and is composed of a rectangular main body section 32 whose four corners are chamfered and two mounting sections 33. The main body section 32 and the mounting sections 33 whose size is at least larger than a maximum size of the semiconductor wafer 13 are coupled to each other by an elastic connecting plate 34 so that their rear faces (glow discharge tube 12 side) are flush with each other (there is no stepped portion) and have an elastic structure.

A hole 35 which can house the supporting body 25 on the glow discharge tube 12 side is formed in the main body section 32, and an elastic and electrically conductive section 36 for setting voltages of the second electrical conductor 41 and the first electrical conductor 31 to be equal with each other is projected from a suitable position of one side surface (surface opposite to the second electrical conductor 41, sandwich surface) 32a of the main body section 32, and a voltage apply section 38 connected with the high-frequency power source (not shown) via a cable 37 is provided on the other side surface.

In addition, the mounting sections 33 are held by insulating holding sections 40 (see Fig. 2) provided in midways of stanchions 39 held to the bracket member 3 (see Fig. 2) in a horizontal direction, and thus the first electrical conductor 31 is fixedly provided to the anode 23 of the glow discharge tube 12 so that its plane, particularly a sandwich surface represented by a reference symbol 32a (see Figs. 2 and 4) is parallel with a vertical direction.

Here, the edge portions of the main body section 32 and the mounting sections 33 are subject to a curve face process and chamfering process so that an edge portion is not generated at the utmost.

The second electrical conductor 41 is made of a copper plate of about 3 mm, for example, and it is provided so as to move linearly with respect to the first electrical conductor 31. The second electrical conductor 41 has the same form and size as those of the main body section 32 of the first electrical conductor 31, but as shown in Fig. 3, it is composed of a small rectangular pressurizing section 42 which matches for the through hole 26 of the anode holder 24 (an area of the semiconductor wafer 13 to be analyzed is positioned here), and a main body section 43 of the pressurizing section 42. The pressurizing section 42 is coupled to the main body section 43 by an elastic coupling plate 44 so that they are flush with each other (a stepped portion is not generated). Here, the edge portion of the main body section 43 undergoes the curved face process and chamfering process so that an edge portion is not generated at the utmost.

There will be described below holding and moving mechanisms of the second electrical conductor 41 with reference to Figs. 2 and 4. In these drawings, 45 and 46 are air cylinders for moving the second electrical conductor 41 linearly, and their cylinder sections 45a and 46a are mounted to a mounting base 49 which is held to a base member 47 held to the stanchions 39 via spacers 48. Moreover, their piston rods 45b and 46b are constituted so as to be capable of expanding and contracting on the first electrical conductor 31 side through holes 50 opened in the base member 47. The points of the piston rods 45b and 46b are mechanically coupled to connection blocks 51 and 52 provided on a side 41b (mounted face side) of the second electrical conductor 41 opposite to a surface 41a (see Fig. 2) for nipping the pressurizing section 42 and the main body section 43.

Guide rods 53, 54 and 55 are provided in the same direction as a direction where the air cylinders 45 and 46 are provided laterally. As for the guide rod 53, its base portion is fixed to the connection block 51, which matches for the pressurizing section 42 of the second electrical conductor 41, and is inserted through a guide section 56 provided to the mounting base 49. As for the other two guide rods 54 and 55, their base portions are fixed to the main body section 42 of the second electrical conductor 41, and are inserted through a guide section 57 and a guide section, not shown, provided to the mounting base 49.

As mentioned above, the second electrical conductor 41 is held by the piston rods 45b and 46b of the two air cylinders 45 and 46 and the three guide rods 53 through 55 so as to be close to or separated from the first electrical conductor 31, and the nipping face 41a is held so as to be parallel with the nipping face 32a of the first electrical conductor 31. Moreover, the second electrical conductor 41 holds the semiconductor wafer 13 in a vertical state by the co-operation with the first electrical conductor 31.

Here, in Fig. 2, a plate-shaped earth conductor 58 is provided in the Faraday cage 2, and its voltage is maintained so as to be equal with the voltage of the Faraday cage 2.

In the case where the material of the semiconductor wafer 13 is analyzed by using the glow discharge emission spectroscopic analysis apparatus having the above structure, as shown in Fig. 2, the semiconductor wafer 13 to be analyzed is held between the electrical conductors 31 and 41 by a magic hand, not shown, in the state that the second electrical conductor 41 is separated from the first electrical conductor 31. When the two air cylinders 45 and 46 are operated, the piston rods 45b and 46b are extended to the direction of the arrow U. As a result, the semiconductor wafer 13 is pushed to the direction of the first electrical conductor 31 so as to be nipped by the first electrical conductor 31 and the second electrical conductor 41. In this case, since a position of the semiconductor wafer 13 to be analyzed is previously known, the position is set by the magic hand so that the pressurizing section 42 in the second electrical conductor 41 matches for the through hole 26 where the anode 23 is provided.

As mentioned above, the semiconductor wafer 13 nipped by the first electrical conductor 31 and the second electrical conductor 41 is pressed against the anode holder 24 of the glow discharge tube 12, and since the sealing member 30 is provided to the pressed face side of the anode holder 24, the discharge emission chamber 16 of the glow discharge tube 12 is sealed by the surface of the semiconductor wafer 13 airtightly. In this case, as for the semiconductor wafer 13, its area to be analyzed (area to be sputtered) faces the cylinder section 22 of the anode 23 positioned in the through hole 26 of the anode holder 24.

In the above state, the main body section 43 of the second electrical conductor 41 contacts with the electrically conductive section 36 provided on the nip face 32a side of the main body section 32 of the first electrical conductor 31 with it being suitably pressed against the electrically conductive section 36. Then, the voltage of the second electrical conductor 41 is equal with the voltage of the first electrical conductor 31.

When a high-frequency voltage is applied from the high-frequency power source (not shown) to the first electrical conductor 31 in a state that the discharge emission chamber 16 is in an atmosphere of argon gas, a predetermined voltage is applied to the whole face of the semiconductor wafer 13 via the first electrical conductor 31 and the second electrical conductor 41 which have the equal voltages. As a result, a discharge is generated, and argon ions are created based on the discharge, and the argon ions are accelerated by a high electric field so as to collide against the surface of the semiconductor wafer 13 which forms a cathode and is subject to predetermined sputtering process. The sputtered particles (atoms, molecules and ions) are excited in plasma, and when the particles return to the ground state, emission which is peculiar to elements is executed. This emitted light is introduced to the direction of the spectroscope in the apparatus main body 1 as a light represented by a reference numeral 13 in Fig. 3.

In the glow discharge emission spectroscopic analysis apparatus, since the semiconductor wafer 13 as the sample to be analyzed is nipped by the first electrical conductor 31 and the second electrical conductor 41, the semiconductor wafer 13 can be held securely in the predetermined state. In the nipped state, the first electrical conductor 31 and the second electrical conductor 41 have the equal voltages, and both the electrical conductors 31 and 41 come closely to the both surfaces of the semiconductor wafer 13 on the front faces. As a result, only by applying a high-frequency voltage to the first electrical conductor 31, a predetermined voltage can be applied to the whole surface of the semiconductor wafer 13, and the applying of a voltage to the semiconductor wafer 13 can be executed very simply and stably. Particularly since a voltage from the high-frequency power source is applied to the fixed first electrical conductor 31, it is not necessary to install a power source cable, and thus installation of another components can be designed easily.

In addition, in the glow discharge emission spectroscopic analysis apparatus, the fixed first electrical conductor 31 is composed of the main body section 32 and the mounting sections 33, and the main body section 32 and the mounting sections 33 are coupled with each other by the elastic coupling plate 34 so as to be flush with each other (no stepped portion is not obtained), and thus the first electrical conductor 31 has an elastic structure. As a result, even if the semiconductor wafer 13 is slightly distorted or warped, the first electrical conductor 31 absorbs the distortion and warpage, and can nip the semiconductor wafer 13 in the predetermined state by the co-operation with the second electrical conductor 41.

Furthermore, the movable second electrical conductor 41 is composed of the pressurizing section 42 for pressurizing the area of the semiconductor wafer 13 to be analyzed and the main body section 43, and has the elastic structure, and the pressing section 42 and the main body section 43 are pressurized respectively by individual piston rods 45b and 46b. As a result, when a pressurizing force of the piston rod 45b to the pressurizing section 42 is set to be larger than a pressurizing force of the piston rod 46b to the main body section 43, for example, the portion of the semiconductor wafer 13 including the area to be analyzed can be pressed strongly against the anode holder 24, and thus predetermined airtightness can be maintained.

When the semiconductor wafer 13 was analyzed by using the glow discharge emission spectroscopic analysis apparatus, intensity of specified silicon wavelengths of 251 nm (secondary light), 288 nm (primary light) and 288 nm (secondary light) were examined. The results shown in the following TABLE 1 were obtained. In this measurement, a frequency of the high-frequency voltage was 13.56 MHz, an electric power was 50W, and a pressure in the glow discharge tube 12 was maintained within 4 to 5 mhPa (mPa).

Changing parameters are:

    a. size of the semiconductor wafer 13 (6 in or 8 in);
    b. position of the semiconductor wafer 13;
    c. existence/non-existence of the two electrical conductors 31 and 41; and
    d. distance from the semiconductor 13 to the earth conductor 58.

[TABLE 1]

|  | 251 (2nd) | 288 (1st) | 288 (2nd) | Size (inch) | Position | Existence/ non-existence of electrical conductors | Distance (cm) |
|---|---|---|---|---|---|---|---|
| 1 | 806 | 800 | 33 | 6 | Center | Non-exist | 21 |
| 2 | 578 | 570 | 28 | 8 | Center | Non-exist | 21 |
| 3 | 234 | 232 | 11 | 8 | Edge | Non-exist | 21 |
| 4 | 1152 | 1130 | 45 | 8 | Center | Exist | 21 |
| 5 | 1168 | 1157 | 46 | 8 | Edge | Exist | 21 |
| 6 | 1154 | 1152 | 46 | 6 | Edge | Exist | 21 |
| 7 | 1089 | 1070 | 42 | 8 | Edge | Exist | 11 |
| 8 | 851 | 835 | 33 | 8 | Edge | Exist | 5 |

The following is understood from TABLE 1. At first, in measurement 1 through measurement 3, a voltage was applied to the semiconductor wafer 13 as shown in Fig. 5(A) without using the first electrical conductor 31 and the second electrical conductor 41. In measurement 1 and 2, only the size of the semiconductor wafer 13 differed from each other, and as the size of the semiconductor wafer 13 was smaller, the emission intensity was stronger.

In measurement 2 and measurement 3, the sizes of the semiconductor wafer 13 were equal to each other, but the center of the semiconductor wafer 13 was measured in measurement 2, and a portion close to the edge of the semiconductor wafer 13 was measured in measurement 3. The emission intensity was stronger in the center of the semiconductor wafer 13.

Next, in measurement 4 through measurement 8, the semiconductor wafer 13 was sandwiched between the first electrical conductor 31 and the second electrical conductor 41 and in this state a voltage was applied to the semiconductor wafer 13. Measurement 4 and measurement 5 are different from each other only in that the measuring position of the semiconductor wafer 13 is its center or edge, and the other conditions were not different from each other. A difference in the intensity between respective wavelengths was hardly recognized

In measurement 5 and measurement 6, the centers of the semiconductor wafers 13 with different sizes were measured, and the other conditions were not different from each other. A difference in the intensity between respective wavelengths was hardly recognized.

In measurement 5, 7 and 8, the distance from the semiconductor wafer 13 to the earth conductor 58 differed from each other. Even if the first electrical conductor 31 and the second electrical conductor 41 nip the semiconductor wafer 13 so as to cover it, as the distance between the semiconductor wafer 13 and the earth conductor 58 becomes shorter, the emission intensity is reduced. It is considered that this is because since the earth condition of the earth conductor 58 is incomplete at a high frequency, an electric power loss occurs, and thus the loss depends on the distance between the earth conductor 58 and the semiconductor wafer 13 so that the emission intensity changes. Moreover, it is also considered that when capacitive coupling between the first electrical conductor 31 and the second electrical conductor 41 and the earth conductor 58 exceeds a fixed amount, an energy for emission is reduced.

In the above embodiment, a high-frequency voltage is applied to the first electrical conductor 31, but instead of this, a high-frequency voltage may be applied to the second electrical conductor 41.

In the above embodiment, the second electrical conductor 41 is driven by the two air cylinders 45 and 46, but the present invention is not limited to this, and thus it may be driven by one air cylinder.

In addition, in the above embodiment, the semiconductor wafer 13 is used as a sample, but the present invention is not limited to this, and thus, conductors such as metal, non-conductors and semiconductors such as various insulating materials such as ceramics can be used for the analysis. Further, when the sample is the conductor, it is needless to say that a DC voltage may be applied thereto instead of a high-frequency voltage.

Since the present invention is arranged so that the sample is sandwiched between the first electrical conductor and the second electrical conductor and a negative electric potential is given to one of them, a voltage is applied to the sample uniformly, and the intensity of the discharge emission becomes stable. As a result, the desired and stable analyzed results can be obtained. Therefore, the desired chemical analysis may be made with excellent reproducibility.

**Claims**

1.  A glow discharge emission spectroscopic analysis apparatus comprising:

    -   means for arranging a sample (13) to be sputtered so as to face an anode (23) of a glow discharge tube (12) having a discharge emission chamber (16) comprising an opening and further having a supporting body (25) arranged at the anode (23) side and provided in a Faraday cage (2),
    -   means for supplying an inert gas to the sample surface under a low pressure, and
    -   means for emitting a glow discharge by applying a high-frequency voltage or a DC voltage between the sample (13) and the anode (23) so that a discharge emission can be analyzed, - a first electrical conductor (31) provided to one side of the glow discharge tube (12) and a second electrical conductor (41) which is capable of being close to or separated from the first electrical conductor (31) wherein the electrical conductors (31,41) are adapted to sandwich the sample (13) between them,
    -   means to electrically connect both the electrical conductors (31,41) with each other in the state that the sample (13) is sandwiched, and
    -   means to give a negative electric potential to one of both the electrical conductors (31,41),

    wherein said first electrical conductor (31) comprises a main body section (32) having a hole (35), **characterized in that** the hole is adapted to house said supporting body (25) on the glow discharge tube (12) side such that in use the opening of the discharge emission chamber (16) on the anode (23) side is sealed by a surface of the sample (13) to be sputtered.

2.  The glow discharge emission spectroscopic analysis apparatus of claim 1, wherein the first electrical conductor (31) is made of a copper plate.

3.  The glow discharge emission spectroscopic analysis apparatus of claim 1 or 2, wherein said first electrical conductor (31) is provided to one end of said glow discharge tube (12).

4.  The glow discharge emission spectroscopic analysis apparatus of anyone of claims 1 to 3, wherein said second electrical conductor (41) is made of a copper plate which is movable linearly with respect to said first electrical conductor (31).

5.  The glow discharge emission spectroscopic analysis apparatus of any one of claims 1 to 4, wherein main body section (32) and mounting sections (33) are coupled with each other by an elastic coupling plate (34) so as to be flush with each other.

**Patentansprüche**

1.  Spektroskopische Glimmentladungs-Emissionsanalysevorrichtung, mit:

    -   einer Einrichtung zum Anordnen einer Probe (13), welche gesputtert werden soll, damit diese einer Anode (23) einer Glimmentladungsröhre (12) gegenüberliegt, die ihrerseits aufweist eine Glimmentladungskammer (16) mit einer Öffnung sowie einen Trägerkörper (25), welcher auf der Seite der Anode (23) angeordnet ist und welcher in einem Faradayschen Käfig (2) vorgesehen ist,
    -   einer Einrichtung zum Zuführen eines inerten Gases auf die Probenoberfläche, und zwar unter geringem Druck, und
    -   einer Einrichtung zum Emittieren einer Glimmentladung durch Anlegen einer Hochfrequenzspannung oder einer DC-Spannung zwischen der Probe (13) und der Anode (23) derart, dass die Entladungsemission analysiert werden kann,

- einem ersten elektrischen Leiter (31), welcher auf der einen Seite der Glimmentladungsröhre (12) vorgesehen ist, und einem zweiten elektrischen Leiter (41), welcher ausgebildet ist, nahe benachbart oder separiert vom ersten elektrischen Leiter (31) angeordnet zu sein, wobei die elektrischen Leiter (31, 41) derart ausgebildet. sind, dass sie zwischen sich die Probe (13) aufnehmen,

- einer Einrichtung zum elektrischen Verbinden der beiden elektrischen Leiter (31, 41) miteinander in einem Zustand, bei welchem die Probe (13) zwischen ihnen angeordnet ist, und

- eine Einrichtung, um ein negatives elektrisches Potenzial an eine der beiden elektrischen Leiter (31, 41) anzulegen,

- wobei der erste elektrische Leiter (31) einen Hauptbereich (32) mit einem Loch (35) aufweist,

**dadurch gekennzeichnet,**

- **dass** das Loch derart ausgebildet ist, dass es den Trägerkörper (25) auf der Seite der Glimmentladungsröhre (12) derart aufnimmt, dass bei der Verwendung die Öffnung der Glimmentladungskammer (16) auf der Seite der Anode (23) durch die Oberfläche der Probe (13), die gesputtert werden soll, versiegelt ist.

2. Vorrichtung nach Anspruch 1,
   bei welcher der erste elektrische Leiter (31) aus einer Kupferplatte gebildet ist.

3. Vorrichtung nach Anspruch 1 oder 2,
   bei welcher der erste elektrische Leiter (31) an einem Ende der Glimmentladungsröhre (12) vorgesehen ist.

4. Vorrichtung nach einem der Ansprüche 1 bis 3,
   bei welcher der zweite elektrische Leiter (41) aus einer Kupferplatte gebildet ist, welche in Bezug auf den ersten elektrischen Leiter (31) linear bewegbar ist.

5. Vorrichtung nach einem der Ansprüche 1 bis 4,
   bei welcher ein Hauptabschnitt (32) und Befestigungsabschnitte (33) miteinander durch eine elastische Kopplungsplatte (34) derart gekoppelt sind, dass sie miteinander bündig abschließen..

**Revendications**

1. Appareil d'analyse spectroscopique d'émission de décharge luminescente, comprenant :

- des moyens pour disposer un échantillon (13) devant faire l'objet d'une pulvérisation cathodique de façon à ce qu'il soit en regard d'une anode (23) d'un tube à décharge gazeuse (12) comportant une chambre d'émission de décharge (16) comprenant une ouverture et comportant, en outre, un corps de support (25) disposé du côté anode (23) et prévu dans une cage de Faraday (2),

- des moyens pour fournir un gaz inerte à la surface de l'échantillon sous une faible pression, et

- des moyens pour émettre une décharge luminescente par application d'une tension haute fréquence ou d'une tension continue entre l'échantillon (13) et l'anode (23) de façon à ce qu'une émission de décharge puisse être analysée,

- un premier conducteur électrique (31) prévu d'un côté du tube à décharge gazeuse (12) et un second conducteur électrique (41) qui est capable d'être proche ou éloigné du premier conducteur électrique (31), les conducteurs électriques (31, 41) étant adaptés pour intercaler entre eux l'échantillon (13),

- des moyens pour relier électriquement les deux conducteurs électriques (31, 41) entre eux dans un état dans lequel l'échantillon (13) est en condition intercalée, et

- des moyens pour appliquer un potentiel électrique négatif à l'un des conducteurs électriques (31, 41) ou aux deux,

dans lequel ledit premier conducteur électrique (31) comprend une section de corps principal (32) comportant un orifice (35), **caractérisé en ce que**

l'orifice est conçu pour loger ledit corps de support (25) du côté du tube à décharge luminescente (12) de telle sorte que, en fonctionnement, l'ouverture de la chambre d'émission de décharge (16) du côté anode (23) soit scellée par une surface de l'échantillon (13) devant faire l'objet d'une pulvérisation cathodique.

**2.** Appareil d'analyse spectroscopique d'émission de décharge luminescente selon la revendication 1, dans lequel le premier conducteur électrique (31) est constitué par une plaque de cuivre.

**3.** Appareil d'analyse spectroscopique d'émission de décharge luminescente selon la revendication 1 ou la revendication 2, dans lequel ledit premier conducteur électrique (31) est prévu à une extrémité dudit tube à décharge luminescente (12).

**4.** Appareil d'analyse spectroscopique d'émission de décharge luminescente selon l'une quelconque des revendications 1 à 3, dans lequel ledit second conducteur électrique (41) est constitué par une plaque de cuivre qui peut être déplacée de façon linéaire par rapport audit premier conducteur électrique (31).

**5.** Appareil d'analyse spectroscopique d'émission de décharge luminescente selon l'une quelconque des revendications 1 à 4, dans lequel la section de corps principal (32) et des sections de montage (33) sont reliées entre elles par une plaque de couplage élastique (34) de façon à se situer au même niveau les unes par rapport aux autres.

Fig. 1

# Fig.2

EP 1 014 076 B1

Fig.3

# Fig.4

EP 1 014 076 B1

# Fig.5

(A)

(B)

(C)